# EUROPÄISCHE PATENTSCHRIFT

(11) **EP 2 018 465 B1**
(45) Veröffentlichungstag und Bekanntmachung des Hinweises auf die Patenterteilung: **04.08.2010**
(21) Anmeldenummer: 07725239.3
(22) Anmeldetag: 15.05.2007
(51) Int. Cl.: F01B 3/00, F04B 1/20, F16C 19/50

(54) **AXIALKOLBENMASCHINE MIT EINEM FÜHRUNGSSCHENKEL FÜR EIN KÄFIGSEGMENT**
AXIAL PISTON MACHINE HAVING A GUIDE LIMB FOR A CAGE SEGMENT
MACHINE À PISTONS AXIAUX AVEC UNE FUSEE DE GUIDAGE POUR UN SEGMENT DE CAGE

(30) Priorität: 19.05.2006 DE 102006023711
(43) Veröffentlichungstag der Anmeldung: 28.01.2009
(73) Patentinhaber: Brueninghaus Hydromatik GmbH, 89275 Elchingen (DE)
(72) Erfinder: LÖWE, Peter, 88483 Rott (DE); FRÖHLICH, Thomas, 89179 Beimerstetten (DE); ESSIG, Heinz-Gerhard, 89173 Lonsee (DE); MEYER, Manfred, 89275 Elchingen (DE)
(74) Vertreter: Körfer, Thomas
(86) Internationale Anmeldenummer: PCT/EP2007/004322
(87) Internationale Veröffentlichungsnummer: WO 2007/134757

(56) Entgegenhaltungen:
- DE-A1- 3 000 922
- DE-A1- 19 939 473
- DE-B1- 2 521 312
- DE-C1- 19 538 835

## Beschreibung

Die Erfindung betrifft eine Axialkolbenmaschine.

Bei Axialkolbenmaschinen in Schrägscheibenbauart ist es bekannt, eine Schrägscheibe an einem von zwei Schwenklagerteilen auszubilden, die an zwei einander zugewandten Seiten kreisbogenabschnittförmig gekrümmte Führungsflächen aufweisen, zwischen denen ein kreisbogenabschnittförmiger Spalt vorhanden ist, in dem ein Käfigsegment mit mehreren Wälzkörpern gelagert ist. Hierbei handelt es sich um eine Axialkolbenmaschine veränderliches Durchsatzvolumen, deren Schrägscheibe im vorbeschriebenen sogenannten Wiegenlager durch eine Verstellvorrichtung hin und her verschwenkbar ist. Bei solchen Schwenkbewegungen in der Umfangsrichtung der kreisbogenförmigen Krümmung wird auch das Käfigsegment in die Kreisbogenrichtung bewegt, wobei dessen Bewegungslänge aufgrund der Abrollfunktion der Wälzkörper im Wesentlichen nur halb so groß ist wie die Schwenkbewegung der Schrägscheibe. Im Betrieb der Axialkolbenmaschine ist es insbesondere bei schnellen Hin- und Herbewegungen der Schrägscheibe nicht auszuschließen, dass das Käfigsegment sich bezüglich seines ihm zugehörigen Schwenkbereichs in der Kreisbogenrichtung aus seiner Soll-Position verlagert. Dies ist unerwünscht, weil das Käfigsegment dabei seine anzustrebende Lagerposition verliert.

Die vorbeschriebene unerwünschte Veränderung der Lagerposition des Käfigsegments wird im Funktionsbetrieb der Axialkolbenmaschine in solchen Schwenkstellungen begünstigt, in denen die Wälzkörper des Käfigsegments kleine Abnutzungsvertiefungen in die gekrümmten Lagerflächen der Schwenklagerteile eingearbeitet haben. Solche Abnutzungsvertiefungen begünstigen eine unerwünschte Verlagerung des Käfigsegments insbesondere dann, wenn sie sich im Endbereich des Schwenkbereichs des Käfigsegments befinden.

Um solche Lageveränderungen des Käfigsegments zu vermeiden, ist es bekannt, das Käfigsegment durch eine Führungsvorrichtung mit einem länglichen winkelförmigen Führungselement in seiner gewünschten Schwenklage zu sichern, das z.B. durch einen Führungsschenkel gebildet ist, der am Käfigsegment abgestützt ist und den Spalt zwischen den Schwenklagerteilen überragt und mit einem sich quer zu dem einen Führungsschenkel angeordneten anderen Führungsschenkel drehbar mit z.B. dem einen Schwenklagerteil verbunden ist. Diese vorbekannte Führungsvorrichtung ist zwar von kleiner, kostengünstig herstellbarer und raumsparender Konstruktion, jedoch besteht die Gefahr, dass das winkelförmige Führungselement durch insbesondere bei einer Verlagerung des Käfigsegments auftretenden Überlastungen verformt wird.

Eine in der EP 0 649 974 B1 beschriebene Führungsvorrichtung weist ein längliches Führungselement auf, das aus einem einstückigen Draht gebildet ist, der an beiden Enden des Führungselements und in seinem mittleren Bereich jeweils eine durch Biegen des Drahts gebildete kreisförmige Drahtschlinge aufweist. Mit der mittleren Drahtschlinge ist das Führungselement parallel zur Schwenkebene drehbar auf einem vom Käfigsegment seitlich abstehenden Lagerzapfen gelagert. Dabei ist das Führungselement in seinem mittleren Bereich drehbar und in seiner Längsrichtung unbeweglich mit dem Führungssegment verbunden. Die Drahtschlingen an den Enden des Führungselements sind jeweils in einer Kulissenführung in deren Längsrichtung an den Schwenklagerteilen verschiebbar gelagert.

Aufgrund dieser vorbekannten Ausgestaltung ist das Führungselement an seinen Enden zwar durch die Drahtschlingenform stabilisiert, jedoch ist das Führungselement in seinem mittleren Bereich durch die dort befindliche Drahtschlinge in der Form einer Wendel nicht nur erheblich breiter als der Drahtquerschnitt, sondern befindliche Drahtschlinge in der Form einer Wendel nicht nur erheblich breiter als der Drahtquerschnitt, sondern das Führungselement weist auch eine verhältnismäßig geringe Elastizität bei seiner Biegebeanspruchung auf.

In der DE 26 25 298 A1 ist eine vorliegende Führungsvorrichtung mit zwei Federelementen zum Führen des Käfigsegments beschrieben, wobei die beiden Federelemente durch die Schenkel einer U-förmigen Feder gebildet sind, die nur mit einem Schwenklagerteil verbunden ist und deren Schenkel sich quer zum Spalt zwischen den Schwenklagerteilen erstrecken und mit dem Käfigsegment in Mitnahmeverbindung stehen.

In der DE 25 21 312 B1 wird eine Führungsvorrichtung beschrieben, in der an jedem Käfigsegment ein biegeelastischer, sich etwa radial zur Krümmung des bogenförmigen Käfigsegments erstreckender Stab radial verschieblich und schwenkbar angelenkt ist. Der Stab ist dabei mit seinem einen Ende ortsfest an einer Stelle des Gehäuses schwenkbar gelagert und mit seinem anderen Ende an der Schrägscheibe schwenkbar und in seiner Längsrichtung verschiebbar angeordnet. Eine Lagerstelle im Gehäuseteil wird durch das etwa rechtwinklig abgebogene Ende des Stabes gebildet, das in eine Lagebohrung des Gehäuseteils ragt. Innerhalb der Schrägscheibe ist das andere Ende des Stabes über einen Lagerzapfen gelagert, der in einer Bohrung der Schrägscheibe drehbar ist und wobei sich das Ende des Stabes in einer Querbohrung des Zapfens längsverschieblich erstreckt. Innerhalb des Käfigsegments ist ein die Lagerstelle bildender Schwenkkörper angeordnet mit einer Querbohrung, in welcher der Stab längsverschieblich geführt ist.

Alle bekannten Führungsvorrichtungen weisen den Nachteil auf, dass bei den Anfängen einer Verlagerung des Käfigsegments nur eine geringe Federkraft zur Sicherung des Käfigsegments in seiner jeweiligen Soll-Schwenkposition zur Verfügung steht.

Der Erfindung liegt die Aufgabe zugrunde, bei einer Axialkolbenmaschine die Führung des Käfigsegments zu verbessern. Es soll die Elastizität und/oder die Rückführkraft des Führungselements vergrößert werden. Im Weiteren soll eine kleine und insbesondere schmale Konstruktion für die Käfigführung erreicht werden, wobei im Weiteren auch eine stabile und belastbare Konstruktion erreicht werden soll.

Diese Aufgabe wird durch die Merkmale des Anspruchs 1 gelöst. Vorteilhafte Weiterbildung der Erfindung sind in den Unteransprüchen beschrieben.

Der Erfindung liegt die Erkenntnis zugrunde, dass für das Führungselement zum einen eine hinreichende elastisch nachgiebige Sicherungs- bzw. Mitnahmekraft und zum anderen eine raumgünstige Konstruktion für das Käfigsegment gefordert ist.

Bei der erfindungsgemäßen Ausgestaltung nach Anspruch 1 weist bzw. weisen der erste Führungsschenkel und /oder der zweite Führungsschenkel des Führungselements jeweils eine quer gerichtete Ausformung auf. Hierdurch wird die elastische Nachgiebigkeit des winkelförmigen Führungselements vergrößert, ohne das elastische Widerstandsmoment des Führungselements wesentlich zu beeinträchtigen. Da im Bereich des ersten und/oder zweiten Führungsschenkels ein jeweils hinreichend großer seitlicher, z. B. und eine Ausnehmung gebildeter Freiraum zur Verfügung steht, lässt sich die erfindungsgemäße Ausgestaltung auch raumgünstig realisieren. Es wird auch eine kostengünstig herstellbare Konstruktion erreicht, da sich eine Ausformung durch eine Ausbiegung des betreffenden bzw. der Führungsschenkel einfach und kostengünstig herstellen lässt.

Weitere weiterbildungen der Erfindung verbessern das elastische Widerstandsmoment des Führungselements zusätzlich, und sie tragen auch zur Vereinfachung und zu einer raumgünstigen Anordnung des Führungselements zwischen den Schwenklagerteilen bei.

Außerdem werden durch weitere Weiterbildungen der Erfindung die Montage bzw. Demontage der Führungsvorrichtung verbessert.

Nachfolgend werden vorteilhafte Ausgestaltungen der Erfindung anhand von Ausführungsbeispielen und Zeichnungen näher erläutert. In der Zeichnung zeigen:
- Fig. 1: eine erfindungsgemäße Axialkolbenmaschine im axialen Schnitt;
- Fig. 2: eine erfindungsgemäße Führungsvorrichtung für ein Käfigsegment eines Schwenklagers der Axialkolbenmaschine in perspektivischer Darstellung;
- Fig. 3: ein Führungselement in der Vorderansicht;
- Fig. 4: das Führungselement in der Seitenansicht;
- Fig. 5: das Führungselement in der Draufsicht;
- Fig. 6: eine Führungsvorrichtung der Axialkolbenmaschine im axialen Schnitt in abgewandelter Ausgestaltung und vergrößerter Darstellung;
- Fig. 7: die Führungsvorrichtung nach Fig. 6 in der Seitenansicht von rechts;
- Fig. 8: den Teilschnitt VIII-VIII in Fig. 6.

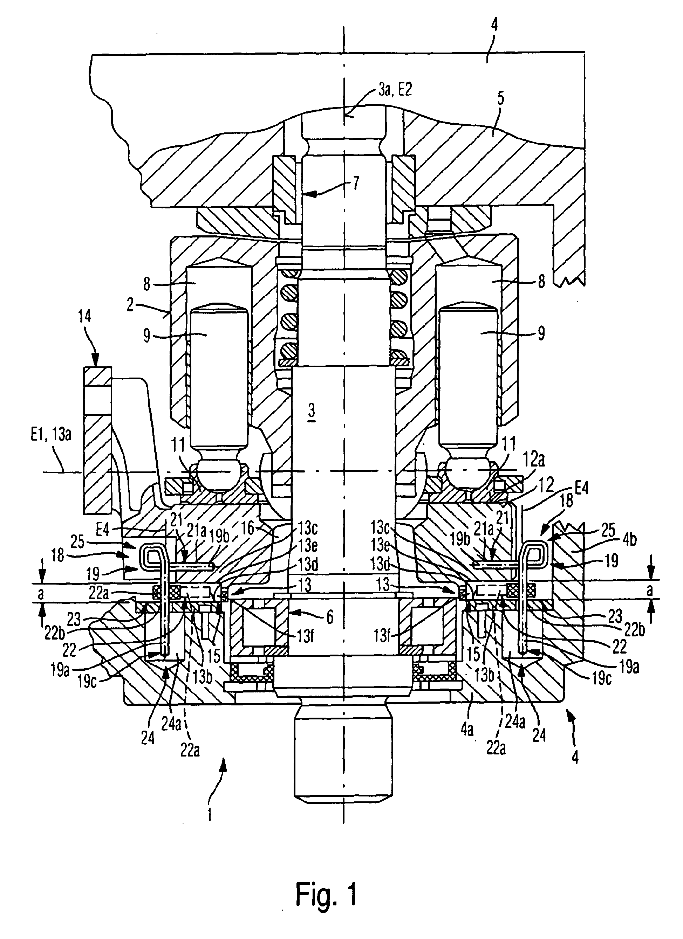

Gemäß Fig. 1 weist die in ihrer Gesamtheit mit 1 bezeichnete Axialkolbenmaschine eine Zylindertrommel 2 auf, die mit einem passenden axialen Loch auf einer Welle 3 drehfest sitzt und mit der Welle 3 drehbar in einem andeutungsweise dargestellten Gehäuse 4 gelagert ist.

Das Gehäuse weist z. B. eine Gehäusebasis 4a auf, von der sich eine teilweise dargestellte Umfangswand 4b topfförmig zu einem Deckel 5 erstreckt, der das topfförmige Gehäuse 4 verschließt und als sogenanntes Anschlussteil für Zu- und Abführungsleitungen eines hydraulischen Leitungskreises ausgebildet ist. Die Welle 3 ist in Drehlagern 6, 7 an der Gehäusebasis 4a und dem Deckel 5 drehbar gelagert, wobei sie je nach Verwendung der Axialkolbenmaschine 1 als Pumpe oder als Motor eine Antriebswelle 3 oder Abtriebswelle 3 bildet.

In der Zylindertrommel 2 sind auf einem Umfang verteilt mehrere Zylinderbohrungen 8 angeordnet, die sich parallel zur Drehachse 3a der Welle 3 oder auch dazu geneigt erstrecken können, und in denen Kolben 9 hin und her verschiebbar gelagert sind, die die Zylindertrommel 2 an ihrer dem Deckel 5 abgewandten Seite überragen und mittels Gleitschuhen 11 an einer Schrägscheibe 12 abgestützt sind. Die Schrägscheibe 12 ist in einem Schwenklager 13 um eine Schwenkachse 13a hin- und her schwenkbar gelagert, die sich in einer Querebene E1 erstreckt, die rechtwinklig zur die Drehachse 3a enthaltenden Axialebene E2 verläuft.

Es kann ein sich quer zur Drehachse 3a bis auf beide Seite der Welle 3 erstreckendes gemeinsames Schwenklager 13 oder zwei Schwenklager 13 auf beiden Seiten der Welle 3 angeordnet sein.

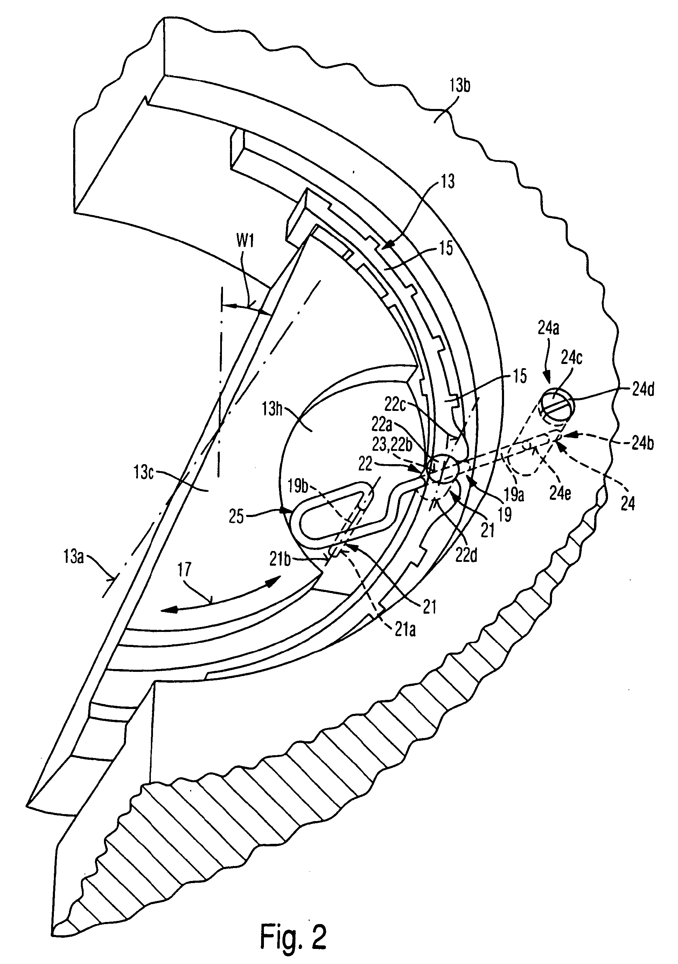

Durch ein Schwenken der Schrägscheibe 12 mittels eines nur andeutungsweise dargestellten Verstellgliedes 14 lässt sich das Durchsatzvolumen der Axialkolbenmaschine 1 wahlweise verringern oder vergrößern. In der Null-Schwenkstellung sind die axiale Kolbenbewegung und das Durchsatzvolumen Null oder zumindest sehr gering. In der um den Schwenkwinkel W1 maximal ausgeschwenkten Schwenkstellung gemäß Fig. 2 sind die Kolbenbewegungen und das Durchsatzvolumen maximal.

Die Schrägscheibe 12 ist in dem durch zwei Schwenklagerteile 13b, 13c gebildeten Schwenklager 13 schwenkbar gelagert, die längs der Drehachse 3a nebeneinander angeordnet sind und an ihren einander zugewandten Seiten jeweils zu beiden Seiten der Welle 3 zwei kreisbogenabschnittförmig gekrümmte Lagerflächen 13d, 13e aufweisen, die einen sich parallel zur Drehachse 3a erstreckenden Abstand a voneinander aufweisen. In dem so gebildeten Spalt a ist ein Käfigsegment 15 mit mehreren Wälzkörpern 13f angeordnet. Beim Ausführungsbeispiel sind die Lagerflächen zylinderabschnittförmig und die Wälzkörper 13f zylinderförmig ausgebildet. Das radial äußere Schwenklagerteil 13b kann durch zwei Lagerschalen gebildet sein, die auf beiden Seiten der Drehachse 3a seitlich geführt und durch Stifte zentriert innen an der Gehäusebasis 4a angeordnet sind.

Im Rahmen der Erfindung können die beiderseits der Welle 3 vorhandenen Lagerflächen 13d, 13e auch jeweils durch eine gemeinsame Lagerfläche gebildet sein, die die Welle 3 in einem Durchführungsloch 16 durchfasst, das in der Schwenkrichtung gemäß dem Doppelpfeil 17 z. B. als Langloch so groß ausgerichtet ist, dass das schwenkbare Schwenklagerteil 13c seine Schwenkbewegungen auszuführen vermag.

Beim Ausführungsbeispiel bildet das schwenkbare Schwenklagerteil 13c die Schrägscheibe 12, wobei die ebene Gleitfläche 12a der Schrägscheibe 12 und die zugehörige Lagerfläche bzw. Lagerflächen 13e auf einander abgewandten Seiten der Schrägscheibe 12 angeordnet sind.

Im Funktionsbetrieb der Axialkolbenmaschine 1 ist beim Schwenken der Schrägscheibe 12 der Schwenkweg des Käfigsegments 15 jeweils etwa halb so groß, wie der Schwenkweg der Schrägscheibe 12. Dies ist durch das Abwälzen der Wälzkörper 13f vorgegeben. Da zwischen den Schwenklagerteilen 13b, 13c und den Wälzkörpern 13f keine Formschlussverbindung vorhanden ist, besteht die Gefahr, dass insbesondere bei plötzlichen und schnellen Schwenkbewegungen das Käfigsegment 15 seine Position bezüglich den Schwenklagerteilen 13b, 13c in die eine oder andere Schwenkrichtung 17 verlagert, sozusagen verrutscht. Hierdurch wird das Schwenklager 13 beeinträchtigt.

Um dies zu vermeiden, ist dem bzw. den Käfigsegmenten 15 jeweils eine in ihrer Gesamtheit mit 18 bezeichnete Führungsvorrichtung mit einem länglichen Führungselement 19 zugeordnet, das den Spalt a überquert und jeweils schwenkbar und z. B. auch in seiner Längsrichtung bewegbar mit dem Käfigsegment 15 und den Schwenklagerteilen 13b, 13c verbunden ist und somit in der Lage ist, das Käfigsegment 15 in seiner gewünschten Position bezüglich den Schwenklagerteilen 13b, 13c zu halten und im Schwenkbetrieb bei seiner Schwenkbewegung zu führen bzw. zu steuern.

Das Führungselement 19 ist ein längliches, insbesondere stiftförmiges, Bauteil, z. B. aus elastisch biegsamen Material, und beim Ausführungsbeispiel durch ein Profilstück, z. B. in Form eines Drahtes, insbesondere aus Metal wie Stahl, z. B. Federstahl gebildet. Die Querschnittsform des Führungselements 19 ist vorzugsweise kreisrund. Es ist an einem seiner beiden Enden durch ein Drehlager 21 mit einem Lagerloch 21a schwenkbar gelagert, das sich parallel zur Schwenkachse 13a erstreckt und in dem ein quer vom Führungselement 19 abstehender Führungsschenkel 19b um die zugehörige Drehachse 21 schwenkbar gelagert ist. Der Führungsschenkel 19b ist z. B. ein vom anderen Führungsschenkel 19a rechtwinklig abgebogener Längsabschnitt des Führungselements 19. In diesem ersten Drehlager 21 ist das Führungselement 19 in seiner Längsrichtung unbeweglich am schwenkbaren Schwenklagerteil 13c gelagert.

Das Führungselement 19.ist durch ein zweites Drehlager 22 mit dem Käfigsegment 15 um eine sich parallel zur Schwenkachse 13a erstreckende Drehachse 22c schwenkbar gelagert, wobei dieses zweite Drehlager 22 mit einer ersten Längsführung 23 für das Führungselement 19 kombiniert ist, so dass das Führungselement 19 während einer Drehbewegung im zweiten Drehlager 22 eine längs gerichtete Bewegung in seine eine oder andere Längsrichtung ausführen kann.

Das zweite Drehlager 22 ist durch einen Drehzapfen 22a gebildet, der in einem zeitlich ausmündenden Lagerloch 22d um die sich parallel zur Schwenkachse 13a erstreckende Gelenkachse 22c schwenkbar im zugehörigen Käfigsegment 15 gelagert ist, wobei das Führungselement 19 den Drehzapfen 22a mit geringem Bewegungsspiel in einem Führungsloch 22b durchfasst. Hierdurch ist die erste Längsführung 23 gebildet.

Das Führungselement 19 ist in seinem dem ersten Drehlager 21 abgewandten Endbereich durch eine Kulissenführung 24 mit dem nicht schwenkbaren Schwenklagerteil 13b verbunden. Die Kulissenführung 24 ist durch ein Drehlager 24a und eine Längsführung 24b für das Führungselement 19 bzw. den Führungsschenkel 19a gebildet, und sie weist einen runden Gelenkstift 24c auf, der in einem parallel zur Schwenkachse 13a im Schwenklager 13b angeordnetes Drehlagerloch 24d drehbar gelagert ist und ein die Längsführung 24b bildendes Querlagerloch 24e aufweist, in dem das Führungselement 19 bzw. dessen Führungsschenkel 19a verschiebbar gelagert ist. Die sich ebenfalls parallel zur Schwenkachse 13a entstehende Drehachse des Drehlagers 24a ist mit 24f bezeichnet.

Das Querlagerloch 24c befindet sich im Bereich einer Ausnehmung 13g im Schwenklagerteil 13b, so dass darin das Führungselement 19 bzw. der Führungsschenkel 19a schwenken kann.

Bei einer Ausgestaltung, bei der sich das Führungselement 19 seitlich neben dem nicht schwenkbaren Drehlagerteil 13b befindet, kann die Ausnehmung 13g durch einen seitlichen Freiraum gebildet sein.

Bei der vorbeschriebenen Ausgestaltung ist das Führungselement 19 durch einen einteilig gebogenen Draht gebildet, der sich durch geringen Materialverbrauch, geringes Gewicht und durch eine verhältnismäßig große Festigkeit auszeichnet.

Im Funktionsbetrieb der Axialkolbenmaschine 1 kann das schwenkbare Schwenklagerteil 13c durch die mit 14 nur angedeutete Verstellvorrichtung zwischen der in der Fig. 1 dargestellten Null-Stellung und in der Fig. 2 dargestellten maximal ausgeschwenkten Schwenkstellung hin und her verstellt werden. Dabei wird das Führungselement 19 zwangsläufig mitgeschwenkt, wobei es in jeder wahlweisen Schwenkstellung seine Führungsfunktion auf das Käfigsegment 15 ausübt.

Um die elastische Biegbarkeit zwischen den Führungsschenkeln 19a, 19b zu vergrößern, ist im Führungsschenkel 19a und/oder im Führungsschenkel 19b eine quer gerichtete Ausformung 25 angeordnet, die jeweils vorzugsweise durch eine Ausbiegung des bzw. der Führungsschenkel 19a, 19b gebildet ist, wodurch das Führungselement 19 ein einteiliges Bauteil, insbesondere ein Biegeteil, ist.

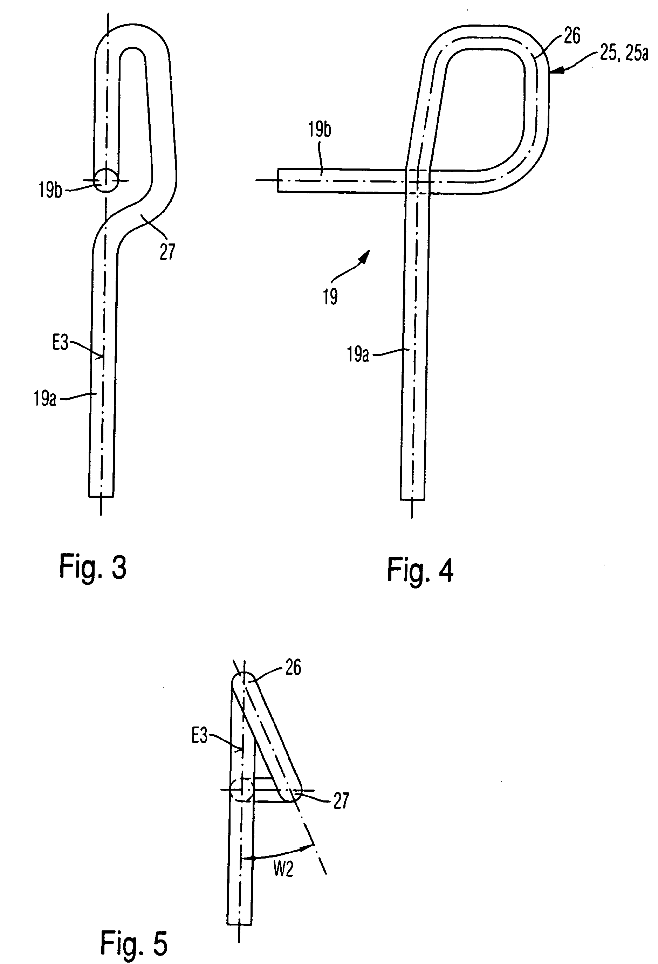

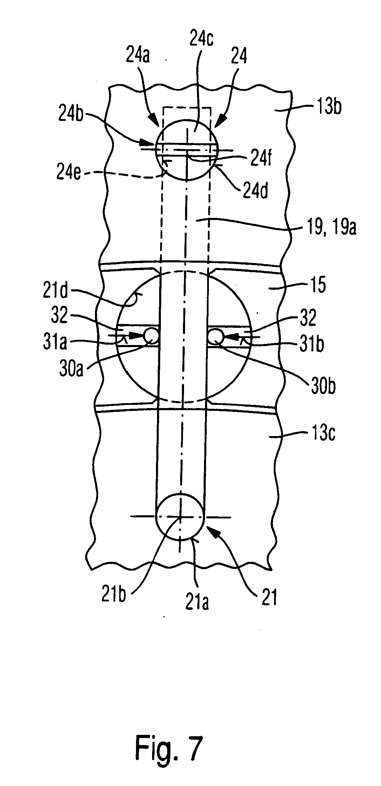

Im Rahmen der Erfindung kann die Ausformung 25 in dem einen Führungsschenkel sich bis zum anderen Führungsschenkel erstrecken oder darüber hinaus erstrecken, wobei die Ausformung 25 zum freien Ende des anderen Führungsschenkels hin ausgeformt sein kann (nicht dargestellt) oder zu dem freien Ende des anderen Führungsschenkels abgewandten Seite hin ausgeformt sein kann, wie es Fig. 1 bis 5 zeigen. Die beiden Führungsschenkel 19a, 19b können sich nebeneinanderliegend kreuzen, wobei die Ausformung 25 durch eine gemeinsame Ausformung 25 z. B. in Form einer Schleife 25a für beide Führungsschenkel 19a, 19b bildet und beiden freien Enden der Führungsschenkel 19a, 19b abgewandt ist. Die Form der Schleife 25a kann rund, dreieckig oder viereckig sein, vorzugsweise mit gerundeten Ecken. Die Mittelachsen der Führungsschenkel 19a, 19b befinden sich vorzugsweise in einer gemeinsamen Ebene E3 (s. Fig. 3 und 7), die auch die Mittelachsen der Drehlager 21, 24a enthält. Um diese Anordnung zu gewährleisten, ist die Schleife 25a quer bzw. schräg zu dieser Ebene E3 (Fig. 5) geformt, so dass der dem Kreuzungspunkt der Führungsschenkel 19a, 19b abgewandte Bereich 26 der Schleife 25a einen spitzen Winkel W2 mit der Ebene E3 einschließt. Der erste Führungsschenkel 19a ist durch einen S-förmig gebogenen Längssbschnitt 27 des Führungselements 19 mit dem seitlich versetzten Bereich der Schleife 25a verbunden.

Durch die wenigstens eine Ausformung 25 bzw. die Schleife 25a sind die Führungsschenkel 19a, 19b durch einen ausgebogenen Biegeabschnitt miteinander verbunden, der die elastische Biegsamkeit zwischen den Führungsschenkeln 19a, 19b vergrößert, ohne das elastische Widerstandsmoment zwischen den Führungsschenkeln 19a, 19b wesentlich zu beeinträchtigen. Das Führungselement 19 ist somit in der Lage, Positionsabweichungen des Käfigsegments 15 elastisch nachzugeben und durch die dabei auftretende Rückbiegespannung das Käfigsegment 15 wieder in seine Sollstellung zurückzubewegen. Wie sich insbesondere aus Fig. 1 entnehmen lässt, befindet sich die Ausformung 25 beim Ausführungsbeispiel nach Fig. 2 raumgünstig in einer z. B. seitlich offenen und z. B. gerundeten Ausnehmung 13h im Schwenklagerteil 13d oder beim Ausführungsbeispiel nach Fig. 1 in einem neben dem Schenklagerteil 13c vorhandenen Freiraum im Innenraum des Gehäuses.

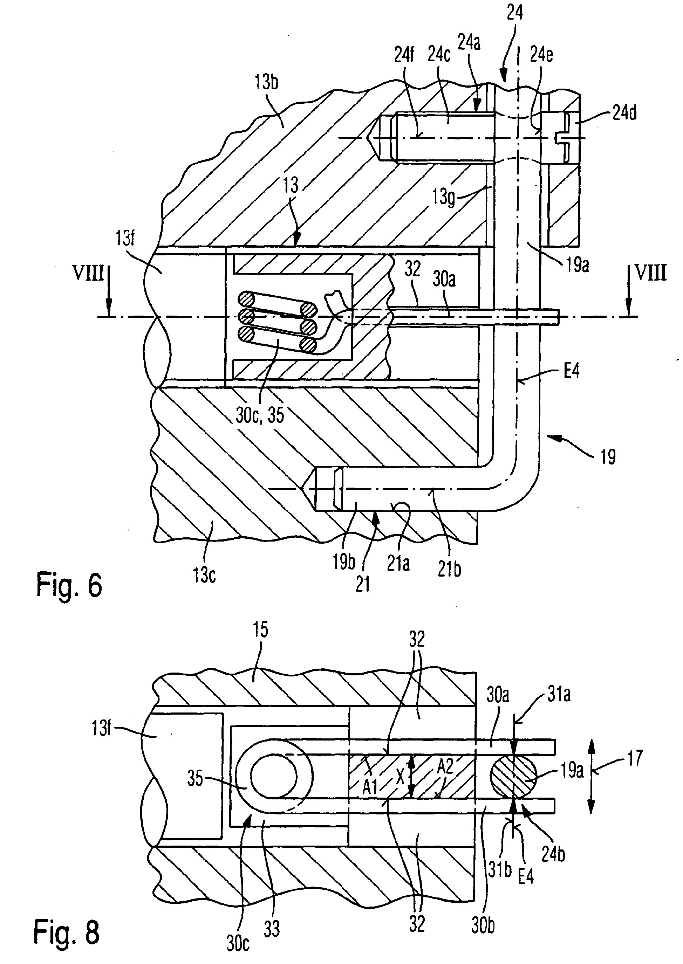

Während beim vorbeschriebenen Ausführungsbeispiel eine Feder in das winkelförmige Führungselement 19 integriert ist, sind beim Ausführungsbeispiel gemäß Fig. 6 bis 8, bei dem gleiche oder vergleichbare Teile mit gleichen Bezugszeichen versehen sind, zwei zusätzliche Federelemente 30a, 30b vorhanden, die das starre oder ebenfalls elastisch biegsame Führungselement 19 auf beiden Seiten seiner Schwenkebene E4 seitlich begrenzen und das Käfigsegments 15 am Führungsschenkel 19a in beide Schwenkrichtungen 17 elastisch abstützen. Wenn das Führungselement 19 unter einer aus einer versetzten Position des Käfigsegments 15 resultierenden Belastung in der Schwenkebene E4 seitlich ausbiegt (elastisch ausbiegbare Ausbildung des Führungsschenkels 19a) oder von seiner jeweiligen Soll-Bewegung seitlich abweicht (elastisch ausbiegbare oder starre Ausbildung des Führungsschenkels 19a), wird das an der jeweils betreffenden Seite des Führungselements 19 angeordnete Federelement 30a bzw. 30b gegen seine Federkraft beaufschlagt, wobei das Federelement 30a bzw. 30b elastisch nachgibt und die dabei wirksame Federrückstellkraft 31a bzw. 31b zur Rückbewegung des Führungselements 19 und des Käfigsegments 15 zur Verfügung steht.

Bedeutsam ist, dass die Federelemente 30a, 30b in ihrer das Führungselement 19 gegen eine seitliche Ausbiegung stützenden Ausgangsstellung mit einer gegen das Führungselement 19 gerichteten Vorspannkraft vorgespannt sind, die jeweils die zugehörige Federkraft 31a, 31b ergibt. Aufgrund dieser Vorspannkraft beginnt die Federkraft 31a, 31b bei einer seitlichen Verlagerung des Führungselements bzw. Führungsschenkels 19a nicht bei Null, sondern mit der größeren Vorspannkraft, so dass zur Führung und Sicherung des Führungselements 19 und des Käfigsegments 15 in der jeweiligen Sollstellung von direkt eine größere Federkraft 31a, 31b zur Verfügung steht. Dabei bleibt die erforderliche elastische Nachgiebigkeit der Federelemente 30a, 30b aufrechterhalten, wenn die am Führungselement 19 wirksame seitliche Belastungskraft die am betreffenden Federelement 30a, 30b wirksame elastische Federkraft bzw. Vorspannkraft 31a, 31b übersteigt. Im Falle einer aus seiner Soll-Position in der jeweiligen Schwenkrichtung 17 versetzten Position des Käfigsegments 15 ist das zugehörige Federelement 30a bzw. 30b gespannt, wobei die zugehörige Federkraft und die Vorspannkraft 31a, 31b zur Rückführung des Käfigsegments 15 in seine Soll-Position zur Verfügung stehen.

Beim Ausführungsbeispiel gemäß Fig.6 bis 8 sind die Federelemente 30a, 30b am Käfigsegment 15 so gelagert, dass sie vom Führungsschenkel 19a abfedern und wieder zurückfedern können. Dabei können die Federelemente 30a, 30b aufgrund ihrer beiderseitigen Anordnung das zugehörige zweite Drehlager 22 und die zugehörige zweite Längsführung 24b bilden. Um dabei den Federschenkel 19a vor einer Klemmwirkung zu schützen, ist es vorteilhaft, die Federelemente 30a, 30b jeweils gegen einen Anschlag A1, A2 in solchen Positionen vorzuspannen, dass die Federelemente 30a, 30b einen Abstand x voneinander aufweisen, der der zugehörigen Querschnittsabmessung des Führungsschenkels 19a, insbesondere dessen Durchmesser, so entspricht, dass der Führungsschenkel 19a dazwischen ggf. mit geringem Bewegungsspiel leicht verschiebbar ist.

Die Federelemente 30a, 30b bilden auch das Drehlager 22, und zwar insbesondere dann, wenn sie wenigstens an ihren einander zugewandten Seiten im Querschnitt gerundet sind, insbesondere jeweils durch einen runden Stift gebildet sind.

Als Federelement 30a, 30b eignen sich zwei Stabfedern, die sich quer zur Schwenkebene E4 des Führungsschenkels 19a erstrecken, diesen gabelförmig übergreifen und den ihren den Führungsschenkel 19a abgewandten Endbereichen am Käfigsegment 15 gehalten sind. Zur Führung dieser Stabfedern können im Käfigsegment 15 außen offenen Nuten 32 angeordnet sein, deren Grundflächen die Anschläge A1, A2 bilden.

Beim Ausführungsbeispiel sind die Federelemente 13a, 13b durch die Schenkel einer U-förmigen gemeinsamen Feder 30 gebildet, deren in zugehörigen Federsteg 30c aufweisender Endbereich in einer Ausnehmung 33 des Käfigsegments 15 sitzt, z. B. zwischen einem Wälzkörper 13f und einem zwischen den Grundflächen der Nuten 32 angeordneten Steg 34 des Drehzapfens 22a im Käfigsegment 15.

Zwecks der Besserung der Elastizität der gemeinsamen Feder 30 ist es vorteilhaft, deren die Federschenkel der U-Form verbindenden Federsteg 30c durch eine Federwendel 35 zu bilden, die sich quer zur Federebene der Federschenkel erstreckt und die dadurch gebildeten stabförmigen Federelemente 30a, 30b miteinander verbindet.

## Patentansprüche

1. Axialkolbenmaschine (1) mit einem aus zwei Schwenklagerteilen (13b, 13c) bestehenden Schwenklager (13) mit einer Schwenkachse (13a) für eine Schrägscheibe (12),
wobei die Schwenklagerteile (13b, 13c) an einander zugewandten Seiten um die Schwenkachse (13a) kreisbogenabschnittförmig gekrümmte Lagerflächen (13d, 13e) aufweisen, zwischen denen ein Spalt (a) angeordnet ist, in dem ein Käfigsegment (15) mit mehreren Wälzkörpern (13f) ebenfalls um die Schwenkachse (13a) schwenkbar gelagert ist,
wobei das Käfigsegment (15) durch ein winkelförmiges Führungselement (19) geführt ist, das einen sich quer zum Spalt (a) erstreckenden und diesen überragenden ersten Führungsschenkel (19a) aufweist, der durch ein erstes Drehlager (21) um dessen sich parallel zur Schwenkachse (13a) erstreckende erste Drehachse (21b) drehbar und durch eine erste Längsführung (23) verschiebbar am Käfigsegment (15) gelagert und in seinem einen Endbereich mit einem sich quer zur Schwenkebene (E4) des ersten Führungsschenkels (19a) erstreckenden zweiten Führungsschenkel (19b) verbunden ist, der durch ein zweites Drehlager (24a) drehbar mit dem einen Schwenklagerteil (13b) verbunden ist,
wobei der erste Führungsschenkel (19a) in einer zweiten Längsführung (24b) verschiebbar und drehbar mit dem anderen Schwenklagerteil (13b) verbunden ist,
**dadurch gekennzeichnet,**
**dass** der erste Führungsschenkel (19a) und/oder der zweite Führungsschenkel (19b) jeweils eine quer gerichtete Ausformung (25) aufweist bzw. aufweisen.

2. Axialkolbenmaschine nach Anspruch 1,
**dadurch gekennzeichnet,**
**dass** die Führungsschenkel (19a, 19b) durch die Ausformung (25) miteinander verbunden sind.

3. Axialkolbenmaschine nach Anspruch 2,
**dadurch gekennzeichnet,**
**dass** wenigstens ein Führungsschenkel den anderen Führungsschenkel überragt und die Ausformung (25) durch eine Schleife (25a) gebildet ist.

4. Axialkolbenmaschine nach Anspruch 3,
**dadurch gekennzeichnet,**
**dass** die Ausformung (25) oder die Schleife (25a) quer zur Ebene der Ausformung (25) oder Schleife (25a) zusätzlich ausgeformt ist.

5. Axialkolbenmaschine nach Anspruch 3 oder 4,
**dadurch gekennzeichnet,**
**dass** die Ausformung (25) oder Schleife (25a) durch einen S-förmigen Ausformungs- oder Schleifenabschnitt (27) mit dem einen Führungsschenkel (19a) verbunden ist.

## Claims

1. Axial piston machine (1) with a pivot bearing (13) consisting of two pivot bearing parts (13b, 13c) with a pivot axis (13a) for a swash plate (12), wherein the pivot bearing parts (13b, 13c) have, on sides facing one another, bearing surfaces (13d, 13e) curved in the shape of a circular arc section, between which surfaces a gap (a) is arranged, in which a cage segment (15) with a plurality of rolling elements (13f) is supported pivotably likewise about the pivot axis (13a), wherein the cage segment (15) is guided by an angular guide element (19), which has a first guide limb (19a) extending transversely to the gap (a) and crossing this, which limb is supported by a first rotary bearing (21) rotatably about its first rotational axis (21b) extending parallel to the pivot axis (13a) and by a first longitudinal guide (23) displaceably on the cage segment (15) and is connected in its one end area to a second guide limb (19b) extending transversely to the pivot plane (E4) of the first guide limb (19a), which second limb is connected by a second rotary bearing (24a) rotatably to one pivot bearing part (13b), wherein the first guide limb (19a) is connected displaceably and rotatably to the other pivot bearing part (13b) in a second longitudinal guide (24b), **characterized in that** the first guide limb (19a) and/or the second guide limb (19b) has or have respectively a transversely aligned moulding (25).

2. Axial piston machine according to claim 1, **characterized in that** the guide limbs (19a, 19b) are connected to one another by the moulding (25).

3. Axial piston machine according to claim 2, **characterized in that** at least one guide limb crosses the other guide limb and the moulding (25) is formed by a loop (25a).

4. Axial piston machine according to claim 3, **characterized in that** the moulding (25) or the loop (25a) is additionally moulded transversely to the plane of the moulding (25) or loop (25a).

5. Axial piston machine according to claim 3 or 4, **characterized in that** the moulding (25) or loop (25a) is connected by an S-shaped moulding or loop section (27) to one guide limb (19a).

## Revendications

1. Machine à piston axial (1) comportant un palier de pivotement (13) qui est constitué de deux parties de palier de pivotement (13b, 13c) et qui possède un axe de pivotement (13a) destiné à un plateau oscillant (12),
les parties de palier de pivotement (13b, 13c) présentant, sur des faces dirigées l'une vers l'autre, des surfaces de palier (13d, 13e) qui sont incurvées en portion d'arc de cercle autour de l'axe de pivotement (13a) et entre lesquelles une fente (a) est ménagée dans laquelle un segment de cage (15) comportant plusieurs corps de rouleau (13f) est monté de façon à pouvoir également pivoter autour de l'axe de pivotement (13a),
le segment de cage (15) étant guidé par un élément de guidage (19), en forme d'équerre, qui comporte une première branche de guidage (19a), s'étendant transversalement à la fente (a) et saillant de celle-ci, qui est montée sur le segment de cage (15) de façon à pouvoir tourner par le biais d'un premier coussinet de pivotement (21) autour du premier axe de rotation (21b) de celui-ci, s'étendant parallèlement à l'axe de pivotement (13a), et de façon à pouvoir coulisser à travers un premier guide longitudinal (23), et qui est reliée dans l'une de ses régions d'extrémité à une seconde branche de guidage (19b) qui s'étend transversalement au plan de pivotement (E4) de la première branche de guidage (19a) et qui est reliée à l'une (13b) des parties de palier de pivotement de façon à pouvoir tourner par le biais d'un deuxième palier de pivotement (24a),
la première branche de guidage (19a) étant reliée à l'autre partie de palier de pivotement (13b) de façon à pouvoir tourner et coulisser dans un deuxième guide longitudinal (24b),
**caractérisée en ce que** la première branche de guidage (19a) et/ou la seconde branche de guidage (19b) comportent chacune une extension (25) orientée transversalement.

2. Machine à piston axial selon la revendication 1, **caractérisée en ce que** les branches de guidage (19a, 19b) sont reliées l'une à l'autre par l'extension (25).

3. Machine à piston axial selon la revendication 2, **caractérisée en ce que** au moins une branche de guidage fait saillie de l'autre branche de guidage, et l'extension (25) est formée par une boucle (25a).

4. Machine à piston axial selon la revendication 3, **caractérisée en ce que** l'extension (25) ou la boucle (25a) est en outre conformée transversalement au plan de l'extension (25) ou de la boucle (25a).

5. Machine à piston axial selon la revendication 3 ou 4, **caractérisée en ce que** l'extension (25) ou la boucle (25a) est reliée à l'une (19a) des branches de guidage par le biais d'une portion de formation ou de boucle (27) en forme de S.
